# EUROPÄISCHE PATENTSCHRIFT

(11) **EP 4 308 264 B1**
(45) Veröffentlichungstag und Bekanntmachung des Hinweises auf die Patenterteilung: **09.04.2025**
(21) Anmeldenummer: 22710355.3
(22) Anmeldetag: 25.02.2022
(51) Int. Cl.: B01D 25/164, B01D 25/21

(54) **ANORDNUNG EINER FILTERPLATTE FÜR EINE FILTERPRESSE UND EINES EINSATZES**
ASSEMBLY CONSISTING OF A FILTER PLATE FOR A FILTER PRESS AND AN INSERT
ENSEMBLE CONSTITUÉ D'UNE PLAQUE FILTRANTE POUR UN FILTRE-PRESSE ET D'UN INSERT

(30) Priorität: 18.03.2021 DE 202021101397 U
(43) Veröffentlichungstag der Anmeldung: 24.01.2024
(73) Patentinhaber: JVK Filtration Systems GmbH, 91166 Georgensgmünd (DE)
(72) Erfinder: SALBAUM, Bernhard, 91187 Mühlstetten (DE)
(74) Vertreter: Tergau & Walkenhorst Intellectual Property GmbH
(86) Internationale Anmeldenummer: PCT/EP2022/054860
(87) Internationale Veröffentlichungsnummer: WO 2022/194520

(56) Entgegenhaltungen:
- WO-A1-2019/149844
- CN-A- 105 854 368
- CN-U- 204 501 644
- DE-U1- 202019 004 384
- GB-A- 467 706

## Beschreibung

Die vorliegende Erfindung betrifft eine Anordnung einer Filterplatte für eine Filterpresse und eines Einsatzes. Bei der Anordnung weist die Filterplatte eine Anlagefläche zur Anlage an eine weitere Filterplatte, die sich parallel zu einer von der Filterplatte gebildeten Ebene erstreckt, und zumindest eine Kanalöffnung zum Bilden eines Kanals auf, wobei die Kanalöffnung senkrecht zu der von der Filterplatte gebildeten Ebene durch die Filterplatte durchtritt, und von einer Kanalfläche der Filterplatte begrenzt ist. Die Filterplatte weist beim Übergang von der Kanalfläche zur Anlagefläche eine ringförmige erste Ausnehmung auf, die eine erste ringförmige Begrenzungsfläche aufweist, in der eine Haltenut gebildet ist. Die Anordnung weist einen zu der ringförmigen ersten Ausnehmung korrespondierenden Einsatz mit einer zweiten ringförmigen Begrenzungsfläche auf.

Es ist bekannt, für eine Filterpresse ein Filterpaket zu bilden, welches aus mindestens zwei oder einer Vielzahl nebeneinander angeordneter Filterplatten besteht. Zwischen den Filterplatten werden jeweils Filterkammern gebildet. Die Filterplatten weisen hierfür eine zentrale Filterfläche und einen die zentrale Filterfläche umrahmenden dickeren Dichtrand auf. In der Filterpresse können die Filterplatten voneinander weg und aufeinander zu verfahren werden, wodurch die Filterkammern geöffnet und geschlossen werden können.

Jede Filterkammer weist üblicherweise zumindest einen Einlaufkanal und einen Ablaufkanal auf. Über den Einlaufkanal fließt die zu filternde Suspension, welche auch als Trübe bezeichnet wird, in die Filterkammer hinein. Die Suspension wird dann mittels eines Filtertuchs gefiltert, wobei die Feststoffe durch das Filtertuch in der Filterkammer zurückgehalten werden, so dass ein sogenannter Filterkuchen entsteht. Das von den Festkörpern befreite Filtrat wird über den Ablaufkanal aus der Filterkammer herausgeleitet.

Aus der WO 2004/043569 A2 ist eine Membranfilterpresse bekannt, bei der nebeneinander mehrere Membranfilterplatten und dazwischen angeordnete membranfreie Filterplatten angeordnet sind. Die Filterplatten sind im Betriebszustand zwischen einem Kopf- und einem Endstück eingespannt und sind so ausgestaltet, dass zwischen ihnen ein Filterraum angeordnet ist. Außen ist bei der Filterplatte jeweils ein dickerer Dichtrand gebildet, bei dem benachbarte Filterplatten aneinander liegen. Im Eckbereich der Filterplatte ist ein Filtratkanal gebildet. Hierfür sind in benachbarten Filterplatten im Bereich des Dichtrandes jeweils Kanalöffnungen vorgesehen, die fluchtende Kanalflächen bilden. Radial innen von dem Filtratkanal ist ein Filtertuch angebracht, welches sich in den Filterraum erstreckt. Der den Filtratkanal umgebene Randbereich der Filterplatte weist eine ringförmige Nut auf, in der ein Dichtring zur Abdichtung des Filtratkanals einliegt. Auf ähnliche Weise kann auch der von benachbarten Filterplatten gebildete Einlaufkanal abgedichtet sein.

Bei dem Einsatz derartiger Filterplatten in einer Filterpresse ergibt sich das Problem, dass es insbesondere bei höheren Temperaturen der zugeführten Suspension im Bereich eines von benachbarten Filterplatten gebildeten Kanals, insbesondere im Bereich des Einlaufkanals, zu Brüchen in der Nut in die Kanalöffnung hinein kommt. Der zwischen einer Nut für eine Dichtung und dem Kanal gebildete ringförmige Vorsprung bricht bereichsweise aus. Dieses Problem tritt beispielsweise bei Filterplatten auf, welche in Anwendungen mit hoher Temperatur eingesetzt werden und festigkeitsbedingt eher spröde Materialeigenschaften aufweisen, um thermischen Spannungen zu widerstehen.

Zur Lösung dieses Problems schlägt die WO 2019/149844 A1 eine Anordnung vor, bei der eine elastische Ringdichtung in der ersten Ausnehmung mittels eines Spannrings eingeklemmt ist. Nachteilig an dieser Anordnung sind jedoch die hohen Herstellungskosten für die einzelnen Elemente der Anordnung.

Weitere Filterplatten mit Ringeinsätzen sind beispielsweise aus den Druckschriften CN 105 854 368 A und GB 467 706 A bekannt.

Der vorliegenden Erfindung liegt daher die Aufgabe zugrunde, eine Anordnung einer Filterplatte für eine Filterpresse und eines Einsatzes sowie eines ringförmigen Einsatzes für eine Filterplatte zu schaffen, die kostengünstig herstellbar sind, bei denen es im Bereich der Abdichtung eines durch mehrere Filterplatten gebildeten Kanals im Betrieb in einer Filterpresse nicht zu Beschädigungen der Filterplatte kommt und bei denen etwaige Beschädigungen im Bereich der Kanalöffnung kostengünstig, zum Beispiel durch einfachen Austausch, reparierbar sind.

Erfindungsgemäß wird diese Aufgabe durch eine Anordnung mit den Merkmalen des Anspruchs 1 und einen ringförmigen Einsatz für eine Filterplatte mit den Merkmalen des Anspruchs 12 gelöst. Vorteilhafte Ausgestaltungen und Weiterbildungen ergeben sich aus den abhängigen Ansprüchen.

Die erfindungsgemäße Anordnung ist dadurch gekennzeichnet, dass der Einsatz eine ringförmige zweite Ausnehmung aufweist, in der eine elastische Ringdichtung angeordnet ist, welche über die von der Anlagefläche gebildete Ebene hinausragt, und der Einsatz im Bereich der Haltenut eine Aufnahmenut aufweist, in welcher ein Haltering angeordnet ist, welcher so in die Haltenut eingreift, dass der Einsatz in axialer Richtung der Kanalöffnung in der ersten Ausnehmung gehalten wird. Der Einsatz, welcher bei der erfindungsgemäßen Anordnung in der ersten Ausnehmung der Filterplatte angeordnet ist, wird vorteilhafterweise durch die elastische Ringdichtung gegenüber einer benachbarten Filterplatte abgedichtet. Ferner wird der Einsatz in axialer Richtung der Kanalöffnung in der ersten Ausnehmung durch die Wechselwirkung der Haltenut der Filterplatte und dem Haltering gegen die erste ringförmige Begrenzungsfläche der ersten Ausnehmung gedrückt, so dass keine Feststoffe mehr zwischen einer Nut und einer Dichtung eindringen können.

Selbst wenn jedoch sehr kleine Feststoffe an der Grenzfläche zwischen dem Einsatz und der ersten ringförmigen Begrenzungsfläche der Filterplatte eindringen würden, führt dies auch bei hohen Temperaturen nicht zu einem Bruch der Filterplatte in der Umgebung der Kanalfläche. Anders als bei bekannten Abdichtungen ist nämlich kein fragiler Vorsprung zwischen einer Nut und der Kanalöffnung gebildet.

Schließlich weist die erfindungsgemäße Anordnung den Vorteil auf, dass der Einsatz sehr einfach ausgetauscht werden kann. Daher können alle Begrenzungsflächen zwischen dem Einsatz und der Filterplatte gereinigt werden. Ferner kann das Material des Einsatzes, welcher in einem Bereich der Filterplatte angeordnet ist, in welchem es häufig zu Beschädigungen kommt, an die Verwendung der Filterplatte in der Filterpresse angepasst werden. Beispielsweise kann der Druck, mit dem eine Suspension in den Kanal eingebracht wird, berücksichtigt werden. Ferner können die auftretenden Temperaturen und die in der Suspension auftretenden Feststoffe hinsichtlich Art und Größe bei der Wahl des Materials und der Ausgestaltung des Einsatzes berücksichtigt werden.

Des Weiteren ist die erfindungsgemäße Anordnung sehr kostengünstig herstellbar. Die erste Ausnehmung lässt sich in die Filterplatte fräsen und der korrespondierende Einsatz lässt sich auch sehr kostengünstig herstellen. Schließlich sind auch die elastische Ringdichtung und der Haltering sehr einfach und kostengünstig herstellbar. Es kann sich dabei um einfache elastische O-Ringe handeln.

Gemäß einer Ausgestaltung der erfindungsgemäßen Anordnung ist der Querschnitt der ringförmigen zweiten Ausnehmung des Einsatzes schwalbenschwanzförmig. Der Querschnitt ist insbesondere ein halber Schwalbenschwanz. Dabei weist die zweite Ausnehmung insbesondere eine Haltefläche für die erste elastische Ringdichtung auf, welche die von der zweiten Ausnehmung gebildete Öffnung in Richtung des Inneren des Einsatzes vergrößert. Gegenüberliegend von dieser Haltefläche der zweiten Ausnehmung ist insbesondere die erste ringförmige Begrenzungsfläche der Filterplatte angeordnet, so dass die elastische Ringdichtung zwischen der Haltefläche der zweiten Ausnehmung, welche die halbe Schwalbenschwanzform bildet, und der ersten ringförmigen Begrenzungsfläche der Filterplatte eingeklemmt ist. Der Querschnitt der elastischen Ringdichtung kann in diesem Fall beispielsweise kreisscheibenförmig sein, so dass sich diese Ringdichtung sehr kostengünstig herstellen lässt.

Es hat sich herausgestellt, dass insbesondere im Bereich des Einlaufkanals Feststoffe der unter Druck zugeführten Suspension in die Nut eingedrückt werden, die in dem Randbereich der Filterplatte gebildet ist, der den Kanal umgibt. Eine solche Anlagerung von Feststoffen ergibt sich insbesondere nach einer längeren Betriebszeit und bei ungenügender Reinigungssorgfalt. Durch den zyklisch anliegenden Schließdruck zwischen dem Dichtring und der Nut werden diese Feststoffe in die Nut eingepresst. Insbesondere bei höheren Temperaturen können diese eingepressten Feststoffe einen Bruch der Nut in den Kanal hinein verursachen. Derartige Brüche treten insbesondere dann auf, wenn der Dichtrand nicht von dem Filtertuch überdeckt ist.

Gemäß einer Ausgestaltung der erfindungsgemäßen Anordnung weist die erste ringförmige Begrenzungsfläche eine erste Teilfläche auf, die parallel zu der von der Filterplatte gebildeten Ebene verläuft. Ferner weist die erste ringförmige Begrenzungsfläche eine zweite Teilfläche auf, die senkrecht zu der von der Filterplatte gebildeten Ebene verläuft. Die erste Ausnehmung ist somit im Wesentlichen rechteckig, insbesondere quadratisch. Es wird bei dem Übergang von der Kanalfläche zur Anlagefläche insbesondere die ringförmige Kante, die normalerweise zwischen diesen beiden Flächen gebildet ist, durch eine im Querschnitt rechteckige, insbesondere quadratische Ausnehmung ausgeschnitten. Auf diese Weise entsteht die ringförmige erste Ausnehmung mit dem rechteckigen bzw. quadratischen Querschnitt. Vorteilhafterweise besteht bei einer solchen Ausnehmung nicht die Gefahr, dass Bereiche der Filterplatte in der Nähe der Kanalfläche oder der Anlagefläche ausbrechen. Gleichwohl ist es bei der erfindungsgemäßen Anordnung möglich, diese erste Ausnehmung für eine Dichtung zwischen benachbarten Filterplatten zu nutzen. In die Ausnehmung kann nämlich die elastische Ringdichtung mittels des Einsatzes gehalten werden.

Gemäß einer Weiterbildung der erfindungsgemäßen Anordnung umfasst die Haltenut einen Vorsprung, der eine erste Haltefläche bildet, die orthogonal zur axialen Richtung der Kanalöffnung ausgerichtet ist. Vorteilhafterweise wird hierdurch der Einsatz in axialer Richtung in der ringförmigen ersten Ausnehmung gehalten. In radialer Richtung wird der Einsatz bereits dadurch in der ersten Ausnehmung gehalten, dass die zweite ringförmige Begrenzungsfläche des Einsatzes mit der ersten ringförmigen Begrenzungsfläche der ersten Ausnehmung korrespondiert und damit diese Begrenzungsflächen aneinander anliegen. Der Vorsprung der Haltenut sichert den Einsatz somit gegen eine Bewegung in axialer Richtung. Hierdurch wird auch verhindert, dass Feststoffteilchen bei der Fuge zwischen der Kanalfläche der Filterplatte und einer inneren Seitenfläche des Einsatzes eindringen können. Optional kann bei dieser Fuge auch eine weitere Ringdichtung angeordnet sein.

Gemäß einer Weiterbildung der erfindungsgemäßen Anordnung nimmt die Aufnahmenut den Haltering so auf, dass der Haltering so an der ersten Haltefläche anliegt, dass der Einsatz in axialer Richtung der Kanalöffnung in der ersten Ausnehmung gehalten wird. Vorteilhafterweise wird hierdurch erreicht, dass der Haltering in axialer Richtung in der Aufnahmenut gehalten ist.

Die Aufnahmenut weist insbesondere eine zweite Haltefläche auf, die orthogonal zur axialen Richtung der Kanalöffnung ausgerichtet ist und mit der ersten Haltefläche fluchtet. Auf diese Weise kann der Haltering den Einsatz in axialer Richtung besonders gut in der ersten Ausnehmung der Filterplatte sichern.

Der Einsatz weist bei der erfindungsgemäßen Anordnung insbesondere eine innere Seitenfläche auf, welche mit der Kanalfläche fluchtet. Hierdurch wird vorteilhafterweise verhindert, dass Feststoffe der von dem Kanal geführten Flüssigkeit, d. h. insbesondere Feststoffe einer zudosierten Suspension, an Vorsprüngen des Kanals hängenbleiben. Um ein Eindringen von Feststoffen in die Fuge zwischen dem Einsatz und der Filterplatte im Bereich der Kanalfläche zu verhindern, kann optional bei dieser Fuge eine weitere Ringdichtung angeordnet sein.

Gemäß einer vorteilhaften Weiterbildung der erfindungsgemäßen Anordnung weist der Einsatz eine Teilanlagefläche auf, welche mit der Anlagefläche fluchtet. Vorteilhafterweise wird die Anlagefläche an die benachbarte Filterplatte durch die Teilanlagefläche des Einsatzes fortgesetzt. Das Eindringen von Feststoffteilchen und Flüssigkeit in den Bereich zwischen benachbarten Filterplatten wird dabei durch die elastische Ringdichtung verhindert, welche in der zweiten Ausnehmung des Einsatzes angeordnet ist.

Die ringförmige zweite Ausnehmung ist insbesondere beim Übergang von der Teilanlagefläche des Einsatzes zu der Anlagefläche der Filterplatte angeordnet.

Die Kanalöffnung der Filterplatte ist insbesondere Teil eines Einlauf- und/oder Ablaufkanals. Über einen solchen Einlaufkanal wird die zu filternde Suspension einer Filterkammer zugeführt, die zwischen zwei Filterplatten gebildet ist. Über den Ablaufkanal wird das Filtrat aus der Filterplatte herausgeführt.

Die elastische Ringdichtung und/oder der Haltering können insbesondere aus einem Elastomer bestehen. Der Einsatz ist insbesondere starr. Er kann aus einem Kunststoff oder einem Metall, insbesondere aus Stahl, bestehen. Das Material der elastischen Ringdichtung und des Einsatzes können an die Verwendung der Filterplatte in der Filterpresse angepasst werden, um den Kanal geeignet abzudichten und zu verstärken.

Bei der Verwendung der Filterplatte in einer Filterpresse ist ein Filtertuch an der Filterplatte befestigt oder zwischen zwei Filterplatten eingeklemmt. Das Filtertuch überdeckt dabei insbesondere nicht die Anlagefläche der Filterplatte, die beim Dichtrand der Filterplatte gebildet ist. Das Filtertuch überdeckt somit auch nicht den Bereich der Anlagefläche, welcher die Kanalöffnung umgibt. Alternativ kann das Filtertuch auch die Anlageflächen der Filterplatten überdecken, wenn es zwischen den Filterplatten eingeklemmt wird.

Vorgesehen ist weiterhin ein ringförmiger Einsatz für eine Filterplatte, der umfangsseitig außen eine zweite ringförmige Begrenzungsfläche zur Anlage an einer korrespondierenden ersten ringförmigen Begrenzungsfläche einer ersten Ausnehmung der Filterplatte aufweist. Erfindungsgemäß weist der Einsatz umfangsseitig außen bei einer Teilanlagefläche eine ringförmige zweite Ausnehmung zur Anordnung einer elastischen Ringdichtung auf. Der Einsatz weist ferner bei der zweiten ringförmigen Begrenzungsfläche eine Aufnahmenut zur Anordnung eines Halterings auf.

Der erfindungsgemäße ringförmige Einsatz ist insbesondere in Verbindung mit der erfindungsgemäßen Anordnung verwendbar. Er weist daher die entsprechenden Vorteile dieser Anordnung auf. Der Einsatz lässt sich dabei sehr kostengünstig herstellen und an die Verwendung der Filterplatte in der Filterpresse anpassen. Ferner kann dieser Einsatz bei einer etwaigen Beschädigung sehr einfach und kostengünstig bei einer Filterplatte ersetzt werden.

Der Querschnitt der ringförmigen zweiten Ausnehmung des Einsatzes ist insbesondere schwalbenschwanzförmig. Der Querschnitt entspricht dabei insbesondere nur der Hälfte eines Schwalbenschwanzes.

Die Erfindung wird nun anhand eines Ausführungsbeispiels mit Bezug zu den Zeichnungen er läutert.
- Figur 1: zeigt eine Aufsicht die Filterplatte des Ausführungsbeispiels der erfindungsgemäßen Anordnung,
- Figur 2: zeigt die Detailansicht der in Figur 1 gezeigten Filterplatte,
- Figur 3: zeigt eine perspektivische Detailansicht des Ausführungsbeispiels der erfindungsgemäßen Anordnung,
- Figur 4: zeigt eine perspektivische Ansicht des Einsatzes des Ausführungsbeispiels der erfindungsgemäßen Anordnung,
- Figur 5: zeigt eine Aufsicht auf den Einsatzes des Ausführungsbeispiels der erfindungsgemäßen Anordnung,
- Figur 6: zeigt die Schnittansicht C-C der Figur 1,
- Figur 7: zeigt die Detailansicht D der Figur 6,
- Figur 8: zeigt eine Schnittansicht E-E des Einsatzes gemäß Fig 5,
- Figur 9: zeigt eine Detailschnittansicht des Einsatzes des Ausführungsbeispiels der erfindungsgemäßen Anordnung im Bereich der ersten Ausnehmung.

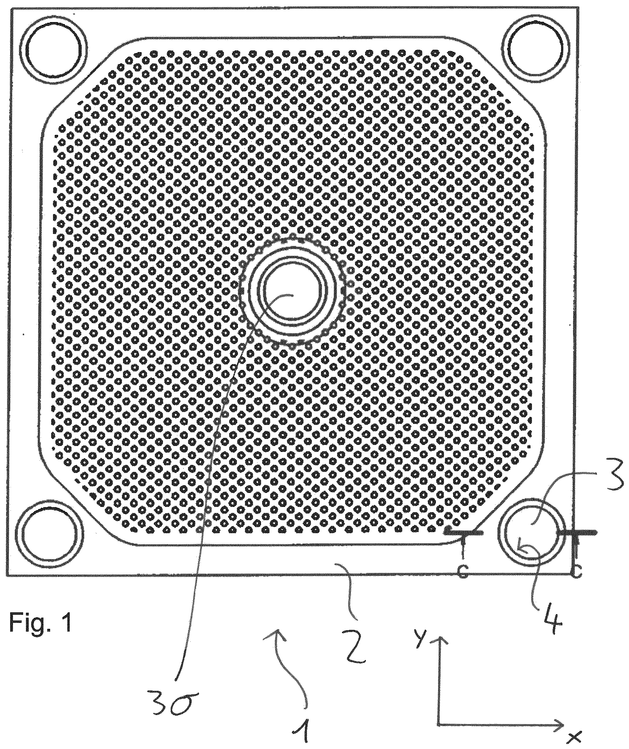

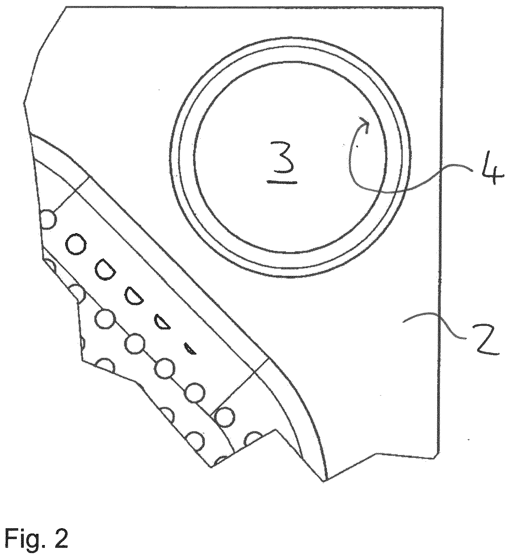

Wie in den Figuren 1 und 2 gezeigt, umfasst die erfindungsgemäße Anordnung eine Filterplatte 1 für eine Filterpresse. Bei der Verwendung der Filterplatte 1 in einer Filterpresse werden mehrere Filterplatten 1 so nebeneinander angeordnet, dass die radial außenliegenden Dichtränder 2 dichtend aneinander anliegen. Bei den äußeren Ecken der Filterplatte 1 sind insgesamt vier Kanalöffnungen 3 gebildet. Ferner ist in der Mitte eine Öffnung 30 gebildet. Bei einer Verwendung der Filterplatte 1 in einer Filterpresse liegen die Kanalöffnungen 3 sowie die Öffnung 30 benachbarter Filterplatten 1 fluchtend aneinander, so dass Kanäle gebildet werden. Dabei handelt es sich um Einlaufkanäle sowie Ablaufkanäle. Über die Einlaufkanäle wird die zu filternde Suspension den von den Filterplatten 1 gebildeten Filterkammern zugeführt. Über die Ablaufkanäle wird das Filtrat aus der Filterplatte 1 herausgeführt.

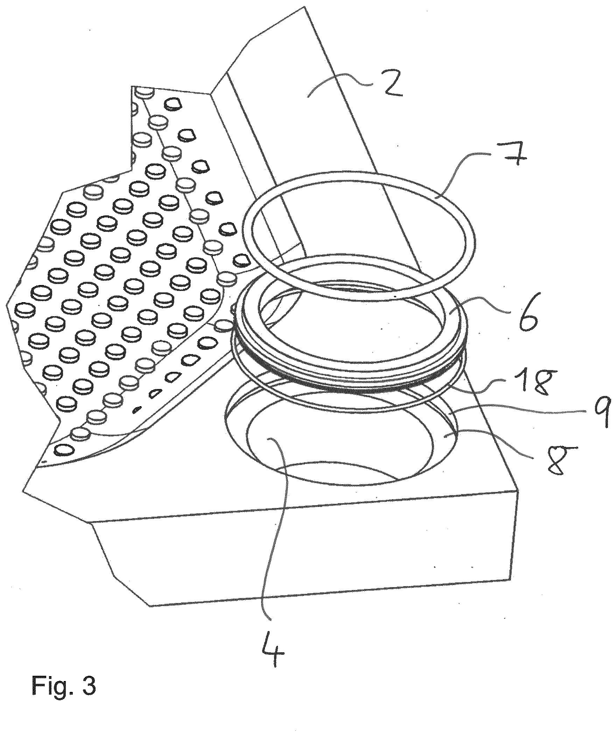

Mit Bezug zu den Figuren 3 bis 9 wird die erfindungsgemäße Anordnung 1 im Bereich der Kanalöffnung 3 beschrieben. Die erfindungsgemäße Anordnung 1 kann jedoch auf gleiche Weise auch bei anderen Kanalöffnungen eingesetzt werden. Diese Kanalöffnungen können sowohl für den Einlaufkanal als auch für den Ablaufkanal gebildet sein.

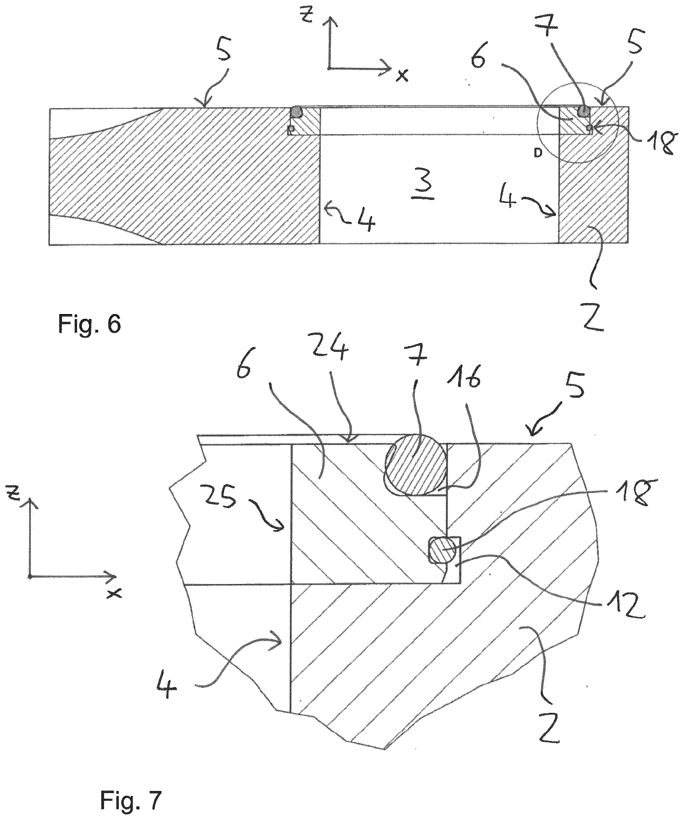

Wenn sich die Filterplatte 1 in der x-y-Ebene (siehe Fig. 1) erstreckt, ist die axiale Richtung der Kanalöffnung 3 die z-Richtung (siehe Fig. 6). Die Kanalöffnung 3 wird von Kanalflächen 4 des Dichtrands 2 der Filterplatte 1 gebildet. Die Kanalfläche 4 ist im Querschnitt kreisringförmig. Die von der Kanalfläche 4 gebildete Kanalöffnung 3 tritt senkrecht zu der von der Filterplatte 1 gebildeten Ebene, das heißt in axialer Richtung (z-Richtung), durch den Dichtrand 2 der Filterplatte 1 durch. Beim Übergang von der Kanalfläche 4 zur Anlagefläche 5 ist eine ringförmige erste Ausnehmung 8 gebildet. Diese ringförmige erste Ausnehmung 8 ist im Querschnitt im Wesentlichen quadratisch. Sie wird von einer ersten ringförmigen Begrenzungsfläche 9 der Filterplatte 1 begrenzt.

Wie in Figur 3 gezeigt, ist in die erste Ausnehmung 8 ist ein Einsatz 6 eingesetzt. Der Einsatz 6 wird von einem Haltering 18 in der ersten Ausnehmung 8 gehalten, wie es später erläutert wird. Ferner ist bei dem Einsatz 6 eine elastische Ringdichtung 7 angeordnet, welche die Fuge zwischen zwei benachbarten Filterplatten abdichtet.

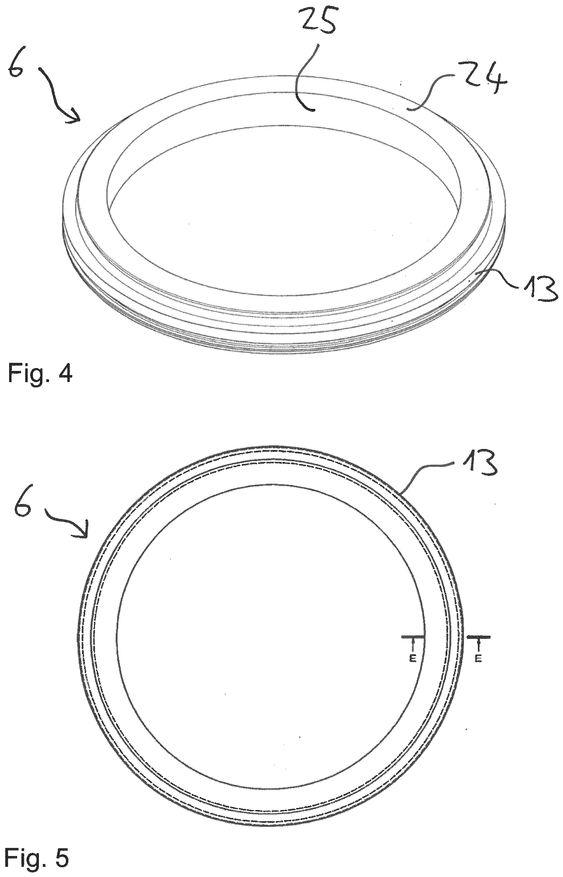

Wie in den Figuren 4 und 5 gezeigt, ist bei dem Einsatz 6 radial außen eine zweite ringförmige Begrenzungsfläche 13 gebildet, welche mit der ersten ringförmigen Begrenzungsfläche 9 der ersten Ausnehmung 8 der Filterplatte 1 korrespondiert. Radial innen ist eine innere Seitenfläche 25 gebildet und parallel zu der von der Filterplatte 1 gebildeten x-y-Ebene ist eine Teilanlagefläche 24 gebildet.

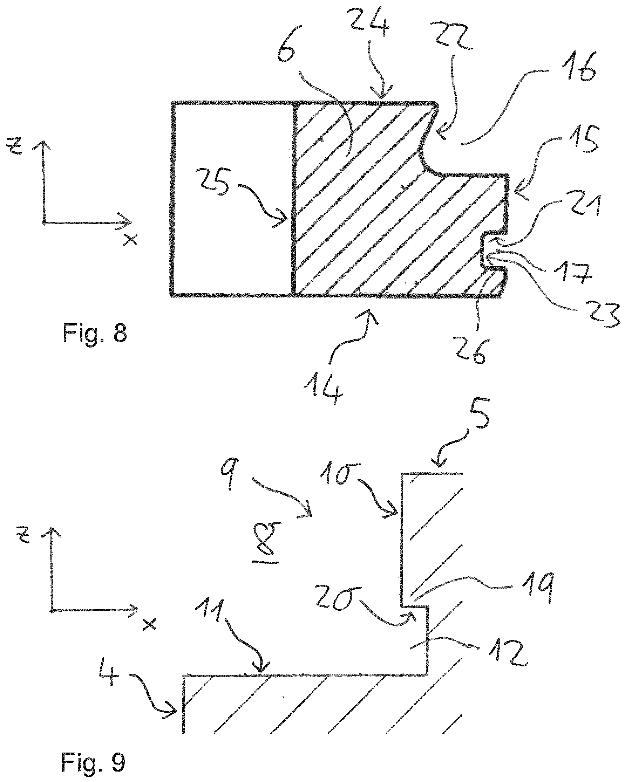

Mit Bezug zu den Figuren 6 bis 9 wird die erfindungsgemäße Anordnung, bei der der Einsatz 6 in der ersten Ausnehmung 8 in der Filterplatte 1 aufgenommen und gehalten ist, im Detail erläutert. Fig. 6 zeigt dabei den Schnitt C-C der Fig. 1, Fig. 7 zeigt das Detail D der Fig. 6, die Fig. 8 zeigt eine Schnittansicht E-E des Einsatzes 6 und Fig. 9 zeigt im Detail eine Schnittansicht der zu dem Einsatz korrespondierenden ersten Ausnehmung 8 der Filterplatte 1.

Der Einsatz 6 ist so in die erste Ausnehmung 8 eingesetzt, dass eine erste Teilfläche 14 der zweiten ringförmigen Begrenzungsfläche 13 des Einsatzes 6 an einer ersten Teilfläche 11 der ersten ringförmigen Begrenzungsfläche 9 der Filterplatte 1 anliegt. Radial innen erstreckt sich die innere Seitenfläche 25 des Einsatzes 6 so weit nach innen, dass sie mit der Kanalfläche 4 der Kanalöffnung 3 fluchtet. Wie in Fig. 7 gezeigt, ist ein unmittelbarer Übergang von der Kanalfläche 4 zu der inneren Seitenfläche 25 gebildet. Optional kann im Bereich der Fuge zwischen der Kanalfläche 4 und der inneren Seitenfläche 25 eine weitere Ringdichtung angeordnet werden.

Eine zweite Teilfläche 15 der zweiten ringförmigen Begrenzungsfläche 13 des Einsatzes 6, die radial außen angeordnet ist und die sich in axialer Richtung der Kanalöffnung 3 (z-Richtung) erstreckt, liegt an einer zweiten Teilfläche 10 der ersten ringförmigen Begrenzungsfläche 9 der ersten Ausnehmung 8 an. Ferner fluchtet die Teilanlagefläche 24 des Einsatzes 6 mit der Anlagefläche 5 der Filterplatte 1. Beim Übergang von der Teilanlagefläche 24 zu der Anlagefläche 5 ist jedoch bei dem Einsatz 6 eine zweite Ausnehmung 16 gebildet. Der Querschnitt dieser zweiten Ausnehmung 16 hat die Form eines halben Schwalbenschwanzes. Die zweite Ausnehmung 16 wird auf der radial innen liegenden Seite von einer Haltefläche 22 begrenzt, die schräg verläuft, so dass sich die Ausdehnung der zweiten Ausnehmung 16 ins Innere vergrößert. Auf der radial außen liegenden Seite wird die zweite Ausnehmung 16 von der zweiten Teilfläche 10 der ersten ringförmigen Begrenzungsfläche 9 der Filterplatte 1 begrenzt. In der zweiten Ausnehmung 16 ist eine elastische Ringdichtung 7 angeordnet, welche über die von der Anlagefläche 5 gebildeten Ebene in x-y-Richtung hinausragt, wie es in Fig. 7 gezeigt ist. Der Querschnitt der elastischen Ringrichtung 7 ist kreisscheibenförmig, wobei der Durchmesser dieser Kreisscheibe so bemessen ist, dass die elastische Ringdichtung 7 in radialer Richtung zwischen der Haltefläche 22 und der zweiten Teilfläche 10 der ersten ringförmigen Begrenzungsfläche 9 eingeklemmt ist. In axialer Richtung ragt die Ringdichtung 7 über die Teilanlagefläche 24 des Einsatzes 6 und die Anlagefläche 5 der Filterplatte 1 hinaus, so dass sie in einer Filterpresse gegen eine benachbarte Filterplatte drückt und die Fuge zwischen benachbarten Filterplatten dichtet.

Des Weiteren ist ein Haltering 18 zwischen dem Einsatz 6 und der Filterplatte 1 so angeordnet, dass der Einsatz 6 in axialer Richtung der Kanalöffnung 3 in der ersten Ausnehmung 8 gehalten wird. Hierfür weist die Filterplatte 1 bei der ersten Ausnehmung 8 eine Haltenut 12 auf, die einen Vorsprung 19 mit einer Haltefläche 20 bildet. Die Haltenut 12 ist benachbart zu der ersten Teilfläche 11 der ersten ringförmigen Begrenzungsfläche 9 gebildet. Die erste Haltefläche 20 ist orthogonal zur axialen Richtung der Kanalöffnung 3 ausgerichtet, d. h. parallel zu der von der Filterplatte 1 gebildeten Ebene in x-y-Richtung. Korrespondierend zu den Haltenut 12 ist bei dem Einsatz 6 eine Aufnahmenut 17 gebildet. Die Aufnahmenut 17 weist eine zweite Haltefläche 21 auf, die auch orthogonal zur axialen Richtung der Kanalöffnung 3 ausgerichtet ist, d. h. parallel zur Ebene in x-y-Richtung. Die zweite Haltefläche 21 fluchtet in der Ebene in x-y- Richtung mit der ersten Haltefläche 20. Ferner weist die Aufnahmenut eine Stirnfläche 23 in einer Ebene in z-y-Richtung auf, die somit senkrecht zu der zweiten Haltefläche 21 ausgerichtet ist. Schließlich ist bei der Aufnahmenut 17 gegenüberliegend von der zweiten Haltefläche 21 eine dritte Haltefläche 26 gebildet. In der Aufnahmenut 17 ist ein Haltering 18 so eingeklemmt, dass er radial nach außen über die von der zweiten Teilfläche 15 der zweiten ringförmigen Begrenzungsfläche 13 gebildeten Ebene hinaussteht. Somit ragt der Haltering 18 in die Haltenut 12 in der Filterplatte 1, so dass der Haltering 18 so an der Haltefläche 20 anliegt, dass der Einsatz 6 in axialer Richtung der Kanalöffnung 3 in der ersten Ausnehmung 8 gehalten wird.

Der Haltering 18 besteht aus einem Elastomer. Er ist so dimensioniert, dass er die erste Teilfläche 14 der zweiten ringförmigen Begrenzungsfläche 13 gegen die erste Teilfläche 11 der ersten ringförmigen Begrenzungsfläche 9 drückt. Bei einer Verwendung der Filterplatte 1 in einer Filterpresse kommt der Dichtrand einer anderen Filterplatte zur Anlage an die Anlagefläche 5 der Filterplatte 1, wenn das Filtertuch innerhalb der Filterkammer montiert ist. Durch die Filterpresse wird in z-Richtung eine Kraft auf benachbarte Filterplatten 1 ausgeübt, welche die Dichtränder 2 aneinanderdrückt. Dabei wird die elastische Ringdichtung 7 elastisch verformt, so dass sie gegen die Anlagefläche einer benachbarten Filterfläche drückt und auch die Fuge zwischen zwei benachbarten Filterplatten 1 bei dem von den Kanalöffnungen 3 gebildeten Kanal abdichtet.

Die Geometrie der ersten Ausnehmung 8 der Filterplatte 1 stellt sicher, dass es zu keinem Bruch der Filterplatte 1 im Bereich der Kanalöffnung 3 kommt, selbst wenn Feststoffteilchen in Fugen eindringen. Außerdem ist es möglich, den Einsatz 6 mit der elastischen Ringdichtung 7 und dem Haltering 18 herauszunehmen, um die Fugen zu reinigen. Schließlich ist es möglich, das Material des Einsatzes 6 auf die Verwendung der Filterplatte 1 in der Filterpresse abzustimmen. Der Einsatz 6 kann aus Materialien verschiedener Festigkeiten bestehen. Ferner kann das Material der elastischen Ringdichtung 7 so angepasst werden, dass die Ringdichtung 7 eine gewünschte Elastizität hat.

## Patentansprüche

1. Anordnung einer Filterplatte (1) für eine Filterpresse und eines Einsatzes (6), bei der die Filterplatte (1) eine Anlagefläche (5) zur Anlage an eine weitere Filterplatte, die sich parallel zu einer von der Filterplatte (1) gebildeten Ebene (x, y) erstreckt, und zumindest eine Kanalöffnung (3) zum Bilden eines Kanals aufweist, wobei die Kanalöffnung (3) senkrecht zu der von der Filterplatte (1) gebildeten Ebene (x, y) durch die Filterplatte (1) durchtritt und von einer Kanalfläche (4) der Filterplatte (1) begrenzt ist, die Filterplatte (1) beim Übergang von der Kanalfläche (4) zur Anlagefläche (5) eine ringförmige erste Ausnehmung (8) aufweist, die eine erste ringförmige Begrenzungsfläche (9) aufweist, in der eine Haltenut (12) gebildet ist, und die Anordnung einen zu der ringförmigen ersten Ausnehmung (8) korrespondieren den Einsatz (6) mit einer zweiten ringförmigen Begrenzungsfläche (13) aufweist, **dadurch gekennzeichnet, dass** der Einsatz (6) eine ringförmige zweiter Ausnehmung (16) aufweist, in der eine elastische Ringdichtung (7) angeordnet ist, welche über die von der Anlagefläche (5) gebildete Ebene hinausragt, und der Einsatz (6) im Bereich der Haltenut (12) eine Aufnahmenut (17) aufweist, in welcher ein Haltering (18) angeordnet ist, welcher so in die Haltenut (12) eingreift, dass der Einsatz (6) in axialer Richtung der Kanalöffnung (3) in der ersten Ausnehmung (8) gehalten wird.

2. Anordnung nach Anspruch 1, **dadurch gekennzeichnet, dass** der Querschnitt der ringförmigen zweiten Ausnehmung (16) des Einsatzes (6) schwalbenschwanzförmig ist.

3. Anordnung nach Anspruch 2, **dadurch gekennzeichnet, dass** die Haltenut (12) einen Vorsprung (19) umfasst, der eine erste Haltefläche (20) bildet, die orthogonal zur axialen Richtung der Kanalöffnung (3) ausgerichtet ist.

4. Anordnung nach einem der vorhergehenden Ansprüche, **dadurch gekennzeichnet, dass** die Aufnahmenut (17) den Haltering (18) so aufnimmt, dass der Haltering (18) so an der ersten Haltefläche (20) anliegt, dass der Einsatz (6) in axialer Richtung der Kanalöffnung (3) in der ersten Ausnehmung (8) gehalten wird.

5. Anordnung nach einem der vorhergehenden Ansprüche, **dadurch gekennzeichnet, dass** die Aufnahmenut (17) eine zweite Haltefläche (21) aufweist, die orthogonal zur axialen Richtung der Kanalöffnung (3) ausgerichtet ist und mit der ersten Haltefläche (20) fluchtet.

6. Anordnung nach einem der vorhergehenden Ansprüche, **dadurch gekennzeichnet, dass** der Einsatz (6) eine innere Seitenfläche (25) aufweist, welche mit der Kanalfläche (4) fluchtet.

7. Anordnung nach einem der vorhergehenden Ansprüche, **dadurch gekennzeichnet, dass** der Einsatz (6) eine Teilanlagefläche (24) aufweist, welche mit der Anlagefläche (5) fluchtet.

8. Anordnung nach einem der vorhergehenden Ansprüche, **dadurch gekennzeichnet, dass** die ringförmige zweiter Ausnehmung (16) beim Übergang von der Teilanlagefläche (24) des Einsatzes (6) zu der Anlagefläche (5) der Filterplatte (1) angeordnet ist.

9. Anordnung nach einem der vorhergehenden Ansprüche, **dadurch gekennzeichnet, dass** die Kanalöffnung (3) Teil eines Einlauf- und/oder Ablaufkanals ist.

10. Anordnung nach einem der vorhergehenden Ansprüche, **dadurch gekennzeichnet, dass** die elastische Ringdichtung (7) und/oder der Haltering (18) aus einem Elastomer besteht.

11. Anordnung nach einem der vorhergehenden Ansprüche, **dadurch gekennzeichnet, dass** der Einsatz (6) aus einem Kunststoff besteht.

## Claims

1. An assembly consisting of a filter plate (1) for a filter press and an insert (6), wherein the filter plate (1) comprises a contact surface (5) for contacting a further filter plate, which extends parallel to a plane (x, y) formed by the filter plate (1), and at least one channel opening (3) for forming a channel, wherein the channel opening (3) passes through the filter plate (1) perpendicular to the plane (x, y) formed by the filter plate (1) and is bounded by a channel surface (4) of the filter plate (1), the filter plate (1) comprises an annular first recess (8) at the transition from the channel surface (4) to the contact surface (5), which comprises a first annular boundary surface (9), in which a retaining groove (12) is formed, and the assembly comprises an insert (6) corresponding to the annular first recess (8) with a second annular boundary surface (13), **characterised in that** the insert (6) comprises an annular second recess (16), in which an elastic ring seal (7) is arranged, which protrudes beyond the plane formed by the contact surface (5), and the insert (6) in the region of the retaining groove (12) comprises a receiving groove (17), in which a retaining ring (18) is arranged which engages in the retaining groove (12), in such a way that the insert (6) is held in the first recess (8) in the axial direction of the channel opening (3).

2. The assembly according to claim 1, **characterised in that** the cross-section of the annular second recess (16) of the insert (6) is dovetail-shaped.

3. The assembly according to claim 2, **characterised in that** the retaining groove (12) comprises a projection (19) which forms a first retaining surface (20), which is aligned orthogonal to the axial direction of the channel opening (3).

4. The assembly according to any one of the preceding claims, **characterised in that** the receiving groove (17) receives the retaining ring (18), in such a way that the retaining ring (18) abuts against the first retaining surface (20), in such a way that the insert (6) is held in the first recess (8) in the axial direction of the channel opening (3).

5. The assembly according to any one of the preceding claims, **characterised in that** the receiving groove (17) comprises a second retaining surface (21), which is orthogonal to the axial direction of the channel opening (3) and flush with the first retaining surface (20).

6. The assembly according to any one of the preceding claims, **characterised in that** the insert (6) comprises an inner lateral surface (25) which is flush with the channel surface (4).

7. The assembly according to any one of the preceding claims, **characterised in that** the insert (6) comprises a partial contact surface (24), which is flush with the contact surface (5).

8. The assembly according to any one of the preceding claims, **characterised in that** the annular second recess (16) is arranged at the transition from the partial contact surface (24) of the insert (6) to the contact surface (5) of the filter plate (1).

9. The assembly according to any one of the preceding claims, **characterised in that** the channel opening (3) is part of an inlet and/or outlet channel.

10. The assembly according to any one of the preceding claims, **characterised in that** the elastic ring seal (7) and/or the retaining ring (18) consists of an elastomer.

11. The assembly according to any one of the preceding claims, **characterised in that** the insert (6) consists of a plastic.

## Revendications

1. Ensemble constitué d'une plaque filtrante (1) pour un filtre-presse et d'un insert (6), pour lequel la plaque filtrante (1) comporte une surface de contact (5) pour appui sur une autre plaque filtrante, qui s'étend parallèlement à un plan (x, y) formé par la plaque filtrante (1) et comporte au moins une ouverture de conduit (3) pour former un conduit, sachant que l'ouverture de conduit (3) passe à travers la plaque filtrante (1) perpendiculairement au plan (x, y) formé par la plaque filtrante (1) et est délimitée par une surface de conduit (4) de la plaque filtrante (1), la plaque filtrante (1) comporte un premier évidement annulaire (8) à la jonction de la surface de conduit (4) et de la surface de contact (5), qui comporte une première surface de délimitation annulaire (9) dans laquelle est formée une rainure de maintien (12) et l'ensemble comporte l'insert (6) avec une deuxième surface de délimitation annulaire (13) correspondant au premier évidement annulaire (8), ***caractérisé en ce que*** l'insert (6) comporte un deuxième évidement annulaire (16) dans lequel est disposé un joint d'étanchéité annulaire élastique (7), lequel dépasse au-dessus du plan formé par la surface de contact (5) et l'insert (6) comporte une rainure de logement (17) dans le secteur de la rainure de maintien (12) dans laquelle est disposée une bague de maintien (18), laquelle vient en prise dans la rainure de maintien (12) de telle manière que l'insert (6) est maintenu en direction axiale de l'ouverture de conduit (3) dans le premier évidement (8).

2. Ensemble selon la revendication 1, ***caractérisé en ce que*** la section du deuxième évidement annulaire (16) de l'insert (6) est en forme de queue d'aronde.

3. Ensemble selon la revendication 2, ***caractérisé en ce que*** la rainure de maintien (12) comprend une saillie (19), qui forme une première surface de maintien (20), qui est orientée de façon orthogonale par rapport à la direction axiale de l'ouverture de conduit (3).

4. Ensemble selon l'une quelconque des revendications précédentes, ***caractérisé en ce que*** la rainure de logement (17) loge la bague de maintien (18) de telle manière que la bague de maintien (18) s'applique à la première surface de maintien (20) de telle sorte que l'insert (6) est maintenu en direction axiale de l'ouverture de conduit (3) dans le premier évidement (8).

5. Ensemble selon l'une quelconque des revendications précédentes, ***caractérisé en ce que*** la rainure de logement (17) comporte une deuxième surface de maintien (21), qui est orientée de façon orthogonale par rapport à la direction axiale de l'ouverture de conduit (3) et est alignée avec la première surface de maintien (20).

6. Ensemble selon l'une quelconque des revendications précédentes, ***caractérisé en ce que*** l'insert (6) comporte une surface latérale intérieure (25), laquelle est alignée avec la surface de conduit (4).

7. Ensemble selon l'une quelconque des revendications précédentes, ***caractérisé en ce que*** l'insert (6) comporte une surface de contact partielle (24), laquelle est alignée avec la surface de contact (5).

8. Ensemble selon l'une quelconque des revendications précédentes, ***caractérisé en ce que*** le deuxième évidement annulaire (16) est disposé à la jonction de la surface de contact partielle (24) de l'insert (6) et de la surface de contact (5) de la plaque filtrante (1) .

9. Ensemble selon l'une quelconque des revendications précédentes, ***caractérisé en ce que*** l'ouverture de conduit (3) est une partie d'un conduit d'entrée et/ou d'évacuation.

10. Ensemble selon l'une quelconque des revendications précédentes, ***caractérisé en ce que*** le joint d'étanchéité annulaire élastique (7) et/ou la bague de maintien (18) sont composés d'un élastomère.

11. Ensemble selon l'une quelconque des revendications précédentes, ***caractérisé en ce que*** l'insert (6) est composé d'une matière plastique.
